# EUROPÄISCHE PATENTSCHRIFT

(11) **EP 3 948 819 B1**
(45) Veröffentlichungstag und Bekanntmachung des Hinweises auf die Patenterteilung: **07.12.2022**
(21) Anmeldenummer: 20714541.8
(22) Anmeldetag: 24.03.2020
(51) Int. Cl.: G08C 19/00, G08C 19/02, H01Q 13/18, G05B 9/02, H01Q 1/00, H01Q 1/32

(54) **VORRICHTUNG ZUR ÜBERTRAGUNG VON SIGNALEN AUS EINEM ZUMINDEST TEILWEISE METALLISCHEN FÜR DEN EINSATZ IN EINEM EXPLOSIONSGEFÄHRDETEN BEREICH AUSGEBILDETEN GEHÄUSE**
DEVICE FOR TRANSFERRING SIGNALS FROM AN AT LEAST PARTIALLY METAL HOUSING DESIGNED FOR USE IN AN EXPLOSION-PRONE REGION
DISPOSITIF POUR LA TRANSMISSION DE SIGNAUX À PARTIR D'UN BOÎTIER AU MOINS PARTIELLEMENT MÉTALLIQUE CONÇU POUR L'UTILISATION DANS UNE ZONE À RISQUE D'EXPLOSIONS

(30) Priorität: 30.03.2019 DE 102019108359
(43) Veröffentlichungstag der Anmeldung: 09.02.2022
(73) Patentinhaber: Endress+Hauser SE+Co. KG, 79689 Maulburg (DE)
(72) Erfinder: BLÖDT, Thomas, 79585 Steinen (DE); SCHÄUBLE, Harald, 79541 Lörrach (DE); LILL, Dirk, 79100 Freiburg (DE); KAISER, Andreas, 4334 Sisseln (DE); BÄNNINGER, Fabian, 8545 Rickenbach (CH)
(74) Vertreter: Laufer, Michael
(86) Internationale Anmeldenummer: PCT/EP2020/058190
(87) Internationale Veröffentlichungsnummer: WO 2020/200926

(56) Entgegenhaltungen:
- EP-A1- 2 654 124
- DE-A1-102014 117 315
- DE-A1-102014 118 391

## Beschreibung

Die Erfindung bezieht sich auf eine Vorrichtung zur Übertragung von Signalen aus einem zumindest teilweise metallischen Gehäuse mit Hilfe elektromagnetischer Wellen einer bestimmten Wellenlänge, ein Feldgeräteadapter zur drahtlosen Datenübertragung und einem Feldgerät der Automatisierungstechnik.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessvariablen Füllstand, Durchfluss, Druck, Temperatur bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os bzw. allgemein Geräte verstanden, die auf der Feldebene angeordnet sind. Eine Vielzahl solcher Feldgeräte wird von der Firma Endress + Hauser hergestellt und vertrieben.

Gegenwärtig sind in einer Vielzahl der bestehenden Automatisierungsanlagen noch Zweileiterfeldgeräte, die über eine Zweidrahtleitung zu einer übergeordneten Einheit, bspw. eine Steuereinheit SPS, verbunden sind, gängig. Die Zweileiterfeldgeräte sind derartig ausgebildet, dass die Mess- bzw. Stellwerte als Haupt-Prozessvariable über die Zweidrahtleitung bzw. das Zweileiterkabel analog in Form eines 4-20 mA Signals kommuniziert, d.h. übertragen, werden. Zur Übertragung aller anderen Daten hat sich insbesondere das HART Protokoll bewährt, bei welchem dem analogen Stromsignal von 4-20 mA ein Frequenzsignal als digitales Zweileitersignal zur Datenübertragung überlagert wird. Gemäß dem HART Protokoll wird zwischen 1200 Hz und 2400 Hz zur Datenübertragung umgeschaltet, wobei die niedrigere Frequenz für eine logische "0" und die höhere Frequenz für eine logische "1" steht. Auf diese Weise bleibt das sich nur langsam veränderliche analoge Stromsignal von der Frequenzüberlagerung unberührt, sodass mittels HART analoge und digitale Kommunikation vereint wird.

Im Zuge der zunehmenden Digitalisierung ist es jedoch wünschenswert, dass die Daten nicht nur über die Zweidrahtleitung, also rein drahtgebunden, übertragen werden können, sondern dass die Daten auch drahtlos mit Hilfe von elektromagnetischen Wellen kommuniziert werden. Sei es um die Daten drahtlos zu einer Datenbank, bspw. einer Cloud-Datenbank, zu übertragen und dort verfügbar zu machen oder um Daten zwischen dem Feldgerät und einer mobilen Bedieneinheit drahtlos zu übertragen, um bspw. das Feldgerät über das mobile Bediengerät drahtlos zu parametrieren bzw. konfigurieren.

Hierfür werden immer häufiger sogenannte Feldgeräteadapter zur drahtlosen Datenübertragung eingesetzt, mit deren Hilfe es möglich ist, die bestehenden Feldgeräte für die drahtlose Datenübertragung nachzurüsten. Derartige Feldgeräteadapter können dabei direkt in die Zweidrahtleitung eingebunden werden. D.h. der Feldgeräteadapter wird quasi als selbstständige Einheit zwischen die übergeordnete Einheit und dem Feldgerät geschaltet. Alternativ kann der Feldgeräteadapter mechanisch auch direkt an das Feldgerät, bspw. über eine Kabelverschraubung angeschlossen und elektrisch mit einer Feldgeräteelektronik verbunden werden.

Häufig werden die Feldgeräteadapter bzw. die Feldgeräte in Bereichen eingesetzt, in denen potentiell Explosionsgefahr besteht. Allgemein lässt sich sagen, dass in vielen Bereichen der Industrie brennbare und explosionsfähige Stoffe in Form von Gasen, Dämpfen, Nebel oder Stäuben vorkommen. Als wichtige Bereiche sind hier Kohlenbergbau, Chemie und Petrochemie, aber auch die Lebensmittelindustrie, Mühlenbetriebe, der Abwasserbereich oder die Biogasherstellung zu nennen. Diese brennbaren Stoffe können im Gemisch mit Sauerstoff eine explosionsfähige Atmosphäre bilden.

Für die Entstehung einer Explosion sind drei Voraussetzungen notwendig: Ein brennbares Gas oder brennbarer Staub, Sauerstoff und eine Zündquelle. Für die Hersteller von Geräten und Schutzsystemen bedeutet dies, dass sie ihre Geräte und Anlagen so entwickeln und konstruieren müssen, dass sie - auch unter der Berücksichtigung von möglichen Fehlern - keine Zündquelle darstellen. Hierfür wurden sogenannte Zündschutzarten definiert, die konstruktive und schaltungstechnische Maßnahmen für die Geräte zur Verwendung in explosionsgefährdeten Bereichen festlegen.

Eine Maßnahme ist, dass der Einsatz von zumindest teilweise metallischen Gehäusen bzw. Metallgehäusen vorgeschrieben ist. Diese weisen jedoch den Nachteil auf, dass im Allgemeinen keine Wellenabstrahlung für die drahtlose Datenübertragung möglich ist. Ferner stellen eventuelle Anbauten an den Feldgeräteadaptern bzw. den Feldgeräten, um dennoch eine Wellenausbreitung zu ermöglichen, wie beispielsweise externe Stabantennen, Schwachstellen für das Gehäuse dar, sodass diese vermieden werden.

Ebenfalls müssen beim Abreißen einer Antenne hohe Feldstärken am Fußpunkt, welche die zulässige Energiedichte in explosionsgefährdeten Bereichen einer Automatisierungsanlage überschreiten könnten, vermieden werden.

Aus dem Stand der Technik sind die EP 2 654 124 A1, die DE 10 2014 117315 A1 und die DE 10 2014 118391 A1 bekannt geworden.

Die EP 2 654 124 A1 offenbart einen druckfesten explosionsgeschützten Behälter, der in einem drahtlosen Hochfrequenzgerät verwendet wird. Die DE 10 2014 117315 A1 und die DE 10 2014 118391 A1 offenbaren jeweils eine Vorrichtung zur Übertragung von Signalen aus mindestens einer Gehäuseöffnung eines zumindest teilweise metallischen Gehäuses mit Hilfe elektromagnetischer Wellen einer bestimmten Wellenlänge.

Der Erfindung liegt die Aufgabe zugrunde, eine Vorrichtung vorzuschlagen, die ein Einsatz in einem explosionsgefährdeten Bereich ermöglicht und dennoch eine hohe Funkreichweite, welche vorzugsweise in alle "Himmelsrichtungen", d.h. möglichst überhaupt keine Bündelung in irgendeine Richtung aufweist. Ferner soll die Vorrichtung kostengünstig zu fertigen sein.

Die Aufgabe wird erfindungsgemäß gelöst durch die Vorrichtung gemäß Patentanspruch 1, dem Feldgeräteadapter zur drahtlosen Datenübertragung gemäß Patentanspruch 14 und dem Feldgerät der Automatisierungstechnik gemäß Patentanspruch 15.

Die erfindungsgemäße Vorrichtung zur Übertragung von Signalen mit Hilfe elektromagnetischer Wellen einer bestimmten Wellenlänge aus einem zumindest teilweise metallischen für den Einsatz in einem explosionsgefährdeten Bereich ausgebildeten Gehäuse, umfasst:
- das Gehäuse mit einer definierten Wanddicke, wobei das Gehäuse im Wesentlichen eine rotationssymmetrische, vorzugsweise zylindrische Außenkontur aufweist,
- eine in dem Gehäuse angeordnete Sende-/Empfangseinheit zum Erzeugen und/oder Empfangen der elektromagnetischen Wellen,
- mindestens eine in dem Gehäuse angeordnete Primärantenne zum Aus- und/oder Einkoppeln der elektromagnetischen Wellen und Übertragen der elektromagnetischen Wellen an die Sende-/Empfangseinheit,
- zumindest eine schlitzförmige Gehäuseöffnung die derartig ausgebildet ist, dass im Zusammenspiel mit der Primärantenne die Signale mit Hilfe der elektromagnetischen Wellen in bzw. aus dem Gehäuse übertragen werden,
- ein aus einem Material mit einer relativen Dielektrizitätszahl echt größer eins gefertigtes Formteil, welches einen an die schlitzförmige Gehäuseöffnung angepassten hervorstehenden schlitzförmigen Bereich aufweist, mit dem das Formteil bis zu einer spezifizierten Tiefe maximal in die Gehäuseöffnung eingreift, wobei die spezifizierte Tiefe derartig gewählt ist, dass eine Kugel oder Halbkugel (MK) mit einem Durchmesser beim Aufsetzen auf der zumindest einen schlitzförmigen Gehäuseöffnung das Formteil nicht berührt, wobei das Formteil ferner einen an den schlitzförmigen Bereich angrenzenden den schlitzförmigen Bereich umlaufenden Bereich mit einer Mindestbreite aufweist, wobei das Formteil mit dem umlaufenden Bereich im Bereich um die zumindest eine schlitzförmige Gehäuseöffnung herum an eine Innenseite des Gehäuses gepresst wird und die Mindestbreite des umlaufenden Bereichs derartig ausgebildet ist, dass sich für ein Gas gemäß der Norm IEC 60079-1 (Ausgabe 27.Juni 2014) ein kürzester Weg durch die zumindest eine schlitzförmige Gehäuseöffnung von der Innenseite zu einer Außenseite des metallischen Gehäuses von mindestens 3 mm ergibt, wenn für ein Volumen V ≤ 10cm³ gilt, oder mindestens 6 mm ergibt, wenn für das Volumen 10 cm³< V ≤ 100 cm³ gilt oder mindestens 10 mm ergibt, wenn für das Volumen V > 100 cm3 gilt, wobei der von dem gesamten Gehäuse eingeschlossene Freiraum als Volumen V definiert ist.

Erfindungsgemäß wird das, vorzugsweise aus Kunststoff hergestellte Formteil, welches im Folgenden auch als Leiter bezeichnet wird, besonders geschützt, indem der Teil des Leiters, welcher in die schlitzförmige Gehäuseöffnung eingeführt wird, soweit zurückgesetzt wird, dass eine Kugel, die gemäß der Vorgaben einer Schlagfestigkeitsprüfung auf die schlitzförmige Gehäuseöffnung fallengelassen wird, den Leiter nicht beschädigen kann.

Eine vorteilhafte Ausgestaltung der erfindungsgemäßen Vorrichtung umfasst ferner umfassend eine Dichtung, die zwischen den in die zumindest eine schlitzförmige Gehäuseöffnung eingebrachten schlitzförmigen Bereich des Formteils und einen die schlitzförmige Gehäuseöffnung definierenden Gehäusewandabschnitt eingebracht ist, sodass ein Eindringen von Staub und/oder Wasser vermieden wird.

Insbesondere kann die Ausgestaltung vorsehen, dass die Dichtung in eine seitliche Aufnahme des Gehäusewandabschnitts und/oder eine seitliche Aufnahme des schlitzförmigen Bereichs eingebracht ist.

Eine weitere vorteilhafte Ausgestaltung der erfindungsgemäßen Vorrichtung sieht vor, dass das Formteil aus einem Kunststoff, insbesondere Polyethylen gefertigt ist.

Eine weitere vorteilhafte Ausgestaltung der erfindungsgemäßen Vorrichtung umfasst ferner einen Federstahlbügel, der im Inneren des Gehäuses angeordnet ist und der dazu ausgebildet ist, das Formteil mit dem umlaufenden Bereich in einem Bereich um die zumindest eine schlitzförmige Gehäuseöffnung herum an die Innenseite des Gehäuses zu drücken bzw. zu pressen. Insbesondere kann die Ausgestaltung vorsehen, dass der Federstahlbügel im Querschnitt im Wesentlichen einen U-förmigen Mittenbereich aufweist, an den an den beiden Enden jeweils ein nach außen hin, vorzugsweise in einem Winkel von größer 45° abgehender Steg ausgebildet ist, die so dimensioniert sind, dass der Federstahlbügel an zumindest zwei Stellen bzw. Bereichen an einer Gehäusewand anliegt bzw. abgestützt wird, wobei der Federstahlbügel ferner eine Aussparung und das Formteil ferner zwei Flanken aufweist, von denen je eine an einer langgezogenen Seite des umlaufenden Bereichs ausgebildet ist, und die Aussparung und die Flanken so ausgestaltet sind, dass das Formteil in die Aussparung eingebracht werden kann und das Formteil mit den Flanken auf dem Federstahlbügel aufliegt, sodass der Federstahlbügel das Formteil mit dem umlaufenden Bereich an die Innenseite des Gehäuses drückt bzw. presst.

Eine weitere vorteilhafte Ausgestaltung der erfindungsgemäßen Vorrichtung umfasst ferner eine innerhalb des Gehäuses angeordnete Leiterplatte die derartig als Primärantenne zum Aus- und/oder Einkoppeln der elektromagnetischen Wellen ausgebildet ist, dass die elektromagnetischen Wellen seitlich an einer Leiterplattenkante aus- bzw. eingekoppelt werden und wobei die Leiterplatte so in dem Gehäuse angeordnet ist, dass die Leiterplattenkante zu der schlitzförmigen Gehäuseöffnung positioniert ist. Insbesondere kann die Ausgestaltung vorsehen, dass die Leiterplatte durch eine in das Gehäuse eingebrachte Leiterplattenhalterung so gehalten und angeordnet wird, dass die Leiterplattenkante zu der schlitzförmigen Gehäuseöffnung positioniert ist.

Insbesondere kann gemäß der Ausgestaltung die Primarantenne in Form einer planaren Struktur, insbesondere in Form einer Leiterbahn auf der Leiterplatte ausgebildet und in einem Randbereich der Leiterplatte angeordnet sein, wobei die Leiterbahn aus zwei im Wesentlichen parallelen Teilabschnitten bestehen kann, die über einen 180° Bogenabschnitt miteinander verbunden sind.

Ferner kann gemäß der Ausgestaltung die Leiterplatte ein HF-Schirmzaun umfassen, welcher vorzugsweise aus zumindest einer Reihe von Vias ausgebildet ist, wobei der HF-Schirmzaun zumindest auf derselben Seite der Leiterplatte wie die Primärantenne ausgebildet sein kann und vorzugsweise einen auf der ersten Seite der Leiterplatte an die Leiterplattenkante angrenzenden rechteckige Bereich ausbilden kann, in dem die Primärantenne angeordnet ist.

Alternativ oder ergänzend kann gemäß der Ausgestaltung auch vorgesehen sein, dass die Leiterplatte ein HF-Schirmblech umfasst, welches vorzugsweise ein Metall aufweisendes elektrisches Bauteil, wie beispielsweise eine Spule, ein Kondensator, ein Übertrager, eine Klemme o.ä. aufweist, und wobei das HF-Schirmblech auf der anderen Seite der Leiterplatte wie die Primärantenne ausgebildet ist und/oder dass das HF-Schirmblech und/oder der HF-Schirmzaun so auf der Leiterplatte angeordnet sind, dass die Primärantenne zwischen dem HF-Schirmblech bzw. HF-Schirmzaun und der Leiterplattenkante angeordnet ist.

Eine weitere vorteilhafte Ausgestaltung der erfindungsgemäßen Vorrichtung sieht vor, dass das Formteil Mittel zur Halterung und/oder Positionierung der Leiterplatte, insbesondere ein oder mehrere Stege aufweist.

Eine weitere vorteilhafte Ausgestaltung der erfindungsgemäßen Vorrichtung sieht vor, dass das Formteil und/oder die Leiterplattenhalterung ferner so ausgebildet sind, dass die Leiterplatte mit der an die Primärantenne angrenzende Leiterplattenkante in einer Längsrichtung der zumindest einen schlitzförmigen Gehäuseöffnung im Wesentlichen parallel zu einer Mittellinie der zumindest einen schlitzförmigen Gehäuseöffnung und vorzugsweise auch in einer Querrichtung der schlitzförmigen Gehäuseöffnung mit der Leiterplattenkante im Wesentlichen mittig angeordnet ist.

Eine weitere vorteilhafte Ausgestaltung der erfindungsgemäßen Vorrichtung sieht vor, dass die Leiterplattenhalterung und der Federstahlbügel so zueinander ausgebildet sind, dass die Leiterplattenhalterung den Federstahlbügel in dem Gehäuse abstützt, umso ein Verrutschen und/oder Verschieben zu verhindern.

Eine weitere vorteilhafte Ausgestaltung der erfindungsgemäßen Vorrichtung sieht vor, dass die Leiterplatte zumindest ein Leuchtmittel, insbesondere eine LED, aufweist, das an der Leiterplattenkante angeordnet ist, und wobei vorzugsweise für die Länge der schlitzförmigen Gehäuseöffnung L_{Schlitz} = λ/2 + n_{LED} · LLED gilt, wobei n_{LED} die Anzahl der Leuchtmittel darstellt und L_{LED} ein Wert kleiner gleich 2 mm ist. Insbesondere kann die Ausgestaltung vorsehen, dass das zumindest eine Leuchtmittel an der Leiterplattenkante außerhalb, insbesondere rechts oder links davon, eines unmittelbar hinter der schlitzförmigen Gehäuseöffnung sitzenden Bereichs der Leiterplatte angeordnet ist und das Formteil einen Lichtwellenleiter aufweist, der derartig in dem Formteil integriert und ausgebildet ist, dass ein von dem Leuchtmittel ausgesendetes optisches Signal zu der schlitzförmigen Gehäuseöffnung geführt wird.

Eine weitere vorteilhafte Ausgestaltung der erfindungsgemäßen Vorrichtung sieht vor, dass die zumindest eine schlitzförmige Gehäuseöffnung derartig ausgebildet ist, dass für eine Länge der schlitzförmigen Gehäuseöffnung L_{Schlitz} = λ/2 ± λ/25 und für eine Breite der schlitzförmigen Gehäuseöffnung B_{Schlitz} < 25mm, bevorzugt B_{Schlitz} ≤ 10mm, besonders bevorzugt B_{Schlitz} ≤ 6mm, ganz besonders bevorzugt B_{Schlitz} ≅ 4mm gilt.

Eine weitere vorteilhafte Ausgestaltung der erfindungsgemäßen Vorrichtung sieht vor, dass das Gehäuse derartig ausgebildet ist, dass für eine Länge des Gehäuses L_{Gehäuse} < λ, vorzugsweise L_{Gehäuse} < 0,95·λ, besonders bevorzugt L_{Gehäuse} < 0,90·λ gilt.

Eine weitere vorteilhafte Ausgestaltung der erfindungsgemäßen Vorrichtung sieht vor, dass für die Breite der schlitzförmigen Gehäuseöffnung ferner B_{Schlitz} ≥ 1/100·λ gilt.

Eine weitere vorteilhafte Ausgestaltung der erfindungsgemäßen Vorrichtung sieht vor, dass für einen Umfang der rotationssymmetrische, vorzugsweise zylindrischen Außenkontur des Gehäuse U_{Gehäuse} = n·λ/4 mit n ∈ N gilt.

Die Erfindung betrifft weiterhin ein Feldgeräteadapter zur drahtlosen Datenübertragung in bzw. aus einem explosionsgefährdeten Bereich umfassend eine Vorrichtung nach einer der zuvor beschriebenen Ausgestaltungen.

Die Erfindung betrifft weiterhin auch ein Feldgerät der Automatisierungstechnik umfassend einen Feldgeräteadapter nach der zuvor beschriebenen Ausgestaltung, wobei das Gehäuse an einer zweiten Stirnseite ein mechanisches Anschlusselement zum Anschließen, insbesondere Anschrauben des Feldgeräteadapters an eine Kabeldurchführung des Feldgerätes aufweist.

Die Erfindung wird anhand der nachfolgenden Zeichnungen näher erläutert. Es zeigt:
Fig. 1: eine schematische Darstellung einer Vorrichtung zur Übertragung von Signalen mit Hilfe elektromagnetischer Wellen einer bestimmten Wellenlänge,
Fig. 2: einen Längsschnitt durch die in Fig. 1 dargestellte Vorrichtung,
Fig. 3: einen Querschnitt der Vorrichtung und eine Detailskizze der schlitzförmigen Gehäuseöffnung,
Fig. 4: eine schematische Darstellung der schlitzförmigen Gehäuseöffnung und der Leiterplatte, um die Anordnung der beiden zueinander zu verdeutlichen,
Fig. 5: eine schematische Darstellung einer weiteren Ausgestaltung einer Vorrichtung,
Fig. 6: die in Fig. 5 perspektivisch dargestellten HF-Umlaufwege U1 und U2 in einer Ebene zur Verdeutlichung der Wirkungsweise der Verzögerungselemente,
Fig. 7: eine perspektivische Darstellung der erfindungsgemäßen Vorrichtung,
Fig. 8: eine perspektivische Darstellung der erfindungsgemäßen Vorrichtung bei der Teile des Gehäuses entfernt sind,
Fig. 9: einen Querschnitt durch die erfindungsgemäße Vorrichtung,
Fig. 10: eine Detailansicht der schlitzförmigen Gehäuseöffnung, um die erfindungsgemäße Ausgestaltung des Leiters zu verdeutlichen, und
Fig. 11: ein Querschnitt durch das Formteil bzw. den Leiter.

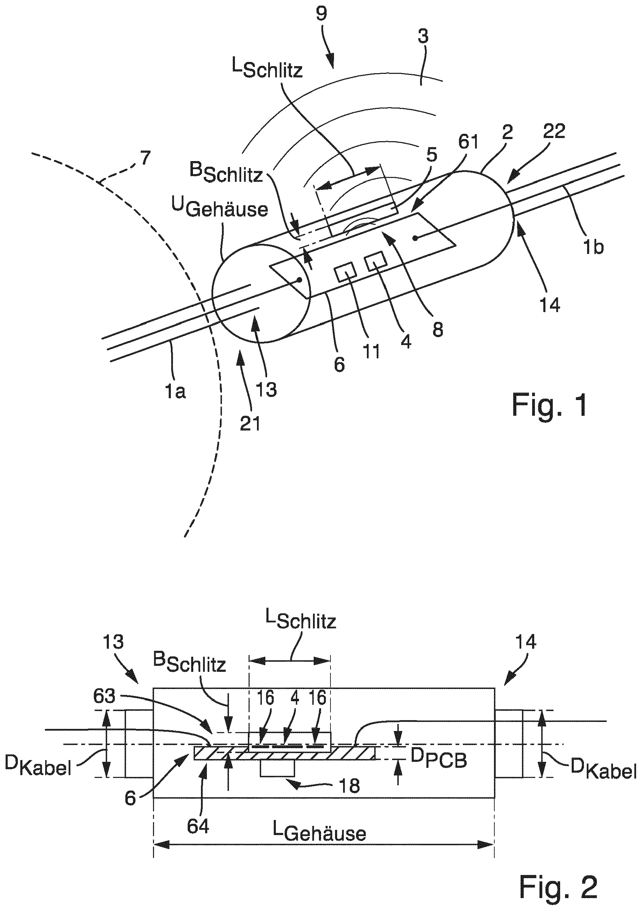

Die in Fig. 1 dargestellte Vorrichtung umfasst ein Gehäuse 2, welches im Wesentlichen aus einem Metall, vorzugsweise einem Edelstahl gefertigt ist. Das Gehäuse 2 kann alternativ aber auch aus einem Kunststoff gefertigt sein und mit einer, vorzugsweise an seiner Innenfläche metallischen Schicht verkleidet sein. Das Gehäuse 2 ist dabei geometrisch derartig ausgebildet, dass es äußerlich eine im Wesentlichen rotationssymmetrische in sich geschlossene Form aufweist. Beispielsweise kann das Gehäuse wie in Fig. 1 dargestellt eine im Wesentliche zylindrische Außenkontur aufweisen. Es versteht sich von selbst, dass mögliche Kabeldurchführungen 13, 14 sowie eine schlitzförmige Gehäuseöffnung 5 davon unberührt bleiben. An den Stirnflächen 21, 22 des zylindrischen Gehäuses 2 kann jeweils eine Kabeldurchführung 13, 14 abgehen, über die ein Kabel 1a, 1b mit zumindest einer Signalleitung in das Gehäuse bzw. aus dem Gehäuse 2 geführt wird. Das Kabel 1a, 1b kann beispielsweise eine in der Prozess- und/oder Fabrikautomatisierung übliche Zweidrahtleitung umfassen. Alternativ kann an einer der beiden Stirnseiten ein mechanisches Anschlusselement zum Anschließen, insbesondere Anschrauben der Vorrichtung an eine Kabeldurchführung eines Feldgerätes 7 aufweisen.

In dem Gehäuse 2 ist eine Leiterplatte 6 angeordnet, zu der bzw. von der das Kabel 1a, 1b mit der Signalleitung führt bzw. abgeht. Die Leiterplatte 6 umfasst eine Sende-/Empfangseinheit 11 zum Erzeugen und Empfangen von elektromagnetischen Wellen. Die Sende-/Empfangseinheit 11 kann bspw. ein in Form eines Chips ausgebildetes HF-Modem sein. Die Leiterplatte 6 umfasst ferner eine Primärantenne 4 zum Auskoppeln der erzeugten elektromagnetischen Wellen und zum Einkoppeln und Übertragen der empfangenen elektromagnetischen Wellen und kann ferner zusätzlich eine Anpassstruktur 15 umfassen. Die Anpassstruktur 15 kann als ein Teil der Sende-/Empfangseinheit und/oder ein Teil der Primärantenne ausgebildet sein. Alternativ kann die Anpassstruktur 15 auch als eigenständiges Bauteil auf der Leiterplatte 6 ausgebildet sein.

Die Sende-/Empfangseinheit 11 ist dazu eingerichtet, elektromagnetische Wellen mit einem Frequenzband von 2,4 GHz zu erzeugen bzw. zu empfangen, sodass die Signale die über das Kabel bzw. die Zweidrahtleitung übertragen werden, durch die Vorrichtung auch drahtlos mittels Bluetooth (ggfl. auch Bluetooth Low Energy) oder einer der zuvor genannten Varianten übertragen werden können.

Das Gehäuse 2 weist eine schlitzförmige Öffnung 5 mit einer Länge L_{Schlitz} auf, wobei die Länge L_{Schlitz} ca. einer halben Wellenlänge λ/2 der elektromagnetischen Welle entsprechen kann. Eine Breite der schlitzförmigen Öffnung 5 kann so gewählt sein, dass für die Breite B_{Schlitz} < 25mm, bevorzugt B_{Schlitz} ≤ 10mm, besonders bevorzugt B_{Schlitz} ≤ 6mm, ganz besonders bevorzugt B_{Schlitz} = 4mm gilt. Bei einer Frequenz von 2,4 GHz und einer Wellenlänge von ca. λ = 122,36 mm kann die schlitzförmige Gehäuseöffnung 5 beispielsweise eine Länge im Bereich von L_{Schlitz} ≅ 61,18 ± 4,89 mm und eine Breite von ca. B_{Schlitz} ≅ 4 mm aufweisen. Die schlitzförmige Öffnung 5 hat keine elektrische Verbindung zu der Leiterplatte 6 und wird von der innerhalb des Gehäuse 2 liegenden Primärantenne 4 angestrahlt. Ferner kann die Gehäuselänge L_{Gehäuse} so gewählt werden, dass sie kleiner ist als eine Wellenlänge 1·λ. Bevorzugt kann die Gehäuselänge L_{Gehäuse} < 0,95·λ, besonders bevorzugt L_{Gehäuse} < 0,90·λ gewählt werden. Auf diese Weise tritt einerseits das Gehäuse nicht als Resonator bei einer Betriebsfrequenz auf, und andererseits ist keine Ausbreitung als Hohlleiter innerhalb des zylindrischen Gehäuses 2 möglich.

Fig. 2 zeigt einen Querschnitt durch die in Fig. 1 dargestellt Vorrichtung. Hierbei ist eine Seitenansicht der Leiterplatte 6 dargestellt, die in dem Gehäuse 2 angeordnet ist. Das Gehäuse umfasst zwei Stirnflächen 21, 22, in welche jeweils eine Kabeldurchführung 13, 14 (mitsamt Kabel und Klemme) angebracht sein kann. Damit keine Hochfrequenzenergie seitlich abgestrahlt wird, kann ein Durchmesser der Kabeldurchführungen kleiner als D_{Kabel} < ¼ · λ gewählt sein. Weiterhin ist in Fig. 2 die Primärantenne 4, welche auch als Abstrahlstruktur bezeichnet wird, dargestellt. Die Primärantenne 4 bildet zusammen mit der schlitzförmigen Gehäuseöffnung 5 und dem Gehäuse 2 eine Antenne. Um die Leiterplatte 6 vor dem Einbau prüfen zu können, kann die Primärantenne 4 ferner derartig ausgebildet sein, dass diese auch ohne Gehäuse zumindest im Nahfeld 8 mindestens eine leichte Antennenwirkung aufweist.

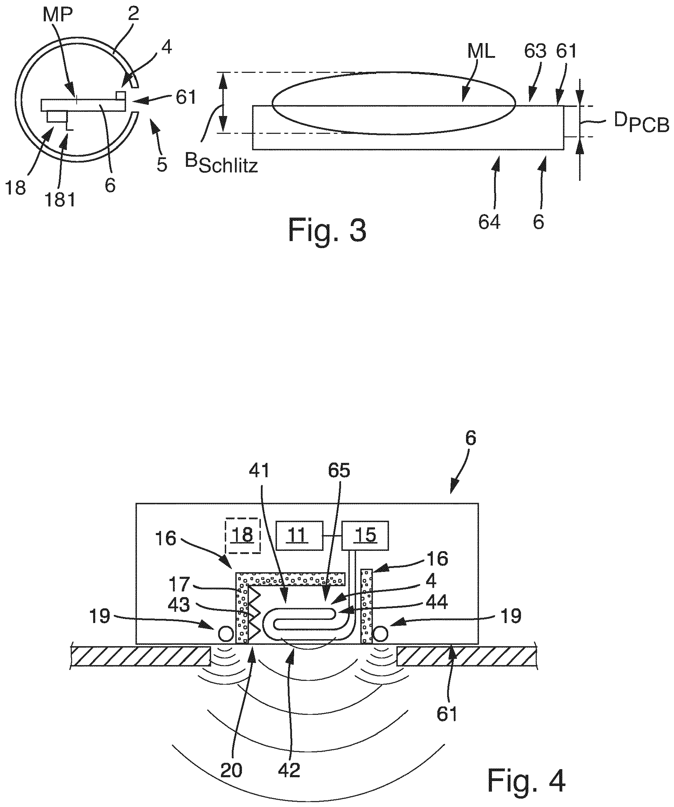

Fig. 3 zeigt auf der linken Seite einen Querschnitt durch die in Fig. 1 und 2 dargestellte Vorrichtung bei der die Leiterplatte 6 vorzugsweise so ausgebildet sein kann, dass für eine Leiterplattendicke D_{PCB} > B_{Schlitz}/2 gilt, sodass die Leiterplatte 6 zumindest teilweise, insbesondere hälftig die schlitzförmigen Gehäuseöffnung 5 überdeckt, wenn die Leiterplatte 6 mit einer Leiterplattenkante 61, an der die Primärantenne angrenzt, auf einen Mittelpunkt MP des Durchmessers des zylindrischen Gehäuses 2 ausgerichtet wird.

Ferner ist in Fig. 3 auf der rechten Seite eine Detailskizze dargestellt, um eine mögliche Anordnung zwischen der Leiterplatte 6 und der schlitzförmigen Gehäuseöffnung 5 zu verdeutlichen. Die Leiterplatte 6 kann ferner mit der an die Primärantenne 4 angrenzende Leiterplattenkante 61 parallel zu einer Mittellinie ML der schlitzförmigen Gehäuseöffnung 5 angeordnet sein.

Fig. 4 zeigt ebenfalls eine schematische Darstellung der schlitzförmigen Gehäuseöffnung 5 und der Leiterplatte 6, um die Ausgestaltung der Leiterplatte 6 näher zu beschreiben.

Die Leiterplatte 6 kann ferner einen HF-Schirmzaun 16 umfassen, welcher aus Vias (Durchkontaktierungen) 17 ausgebildet ist. Die Vias 17 können hierbei so ausgestaltet sein, dass diese von einer ersten Seite der Leiterplatte (Oberseite) 63 zu einer zweiten Seite der Leiterplatte (Unterseite) 64 ragen. Dies bedeutet, dass die Vias 17 durch alle Lagen der Leiterplatte 6 hindurchgehen können. Alternativ können die Vias 17 auch so ausgebildet sein, dass diese nur von der ersten Seite der Leiterplatte 63 zu einer mittleren Leiterkartenlage führen. Der HF-Schirmzaun 16 kann vorzugsweise zweireihig ausgeführt sein, um eine maximale Zaunwirkung auch bei kleinen kostengünstig zu fertigenden Durchkontaktierungen zu erreichen und eine sehr starke Reduktion des Einflusses weitere Elemente im Gehäuse, wie beispielsweise eingeschraubter Kabel, zu bewirken. Durch den HF-Schirmzaun 16 kann ein im Wesentlicher rechteckiger Bereich 65 auf der ersten Seite der Leiterplatte 63 aufgespannt werden, welcher an einer Seite von der Leiterplattenkante 61 begrenzt wird.

Der HF-Schirmzaun 16 kann ferner durch ein HF-Schirmblech 18, welches auf der zweiten Seite der Leiterplatte (Rückseite) 64 angeordnet ist, ergänzt werden. In Fig. 4 ist die Anordnung des HF-Schirmblechs auf der Rückseite der Leiterplatte durch die gestrichelte Linie angedeutet. Das HF-Schirmblech 18 kann neben der Schirmung der HF-Wellen auch eine andere Funktion auf der Leiterplatte 6 erfüllen. Beispielsweise kann das HF-Schirmblech 18 ein, ein Metall aufweisendes elektrisches Bauteil, wie beispielsweise eine Spule, ein Kondensator, ein Übertrager, eine Klemme o.ä. umfassen, wobei das HF-Schirmblech 18 vorzugsweise mit dem HF-Schirmzaun 16 elektrisch verbunden ist. Alternativ können auch sonstige Metallteile, Bauteile mit hohem Metallgehalt wie Spulen oder Bauteile aus Materialien mit hohem DK wie flache SMD-Kondensatoren auf der Leiterplatte 6 als HF-Schirmblech 18 dienen.

Weiterhin kann, wie in Fig. 4 dargestellt, die Leiterplatte 6 die Sende- und/oder Empfangseinheit 11, die Primärantenne 4, die Anpassstruktur 15 zur Impedanzanpassung zwischen der Sende- und/oder Empfangseinheit 11 und der Primärantenne 4 und zwei LEDs umfassen. Die LEDs können dazu dienen, ein optisches Signal auszusenden, umso bspw. einen Status der Vorrichtung zu signalisieren. Damit die LEDs außerhalb des Gehäuses 2 wahrgenommen werden können, kann die Länge der schlitzförmigen Gehäuseöffnung um einen für die LED spezifischen Bereich vergrößert sein. Beispielsweise kann die Länge der schlitzförmigen Gehäuseöffnung rechts und links um einen Millimeter (1 mm) verlängert sein. Dies bedeutet, dass in diesem Fall für die Länge der schlitzförmigen Gehäuseöffnung L_{Schlitz} = λ/2 + n_{LED} · LLED ≅ 63,18 mm mit n_{LED} = 2 und LLED = 1mm gilt. Durch Beugungseffekte aufgrund der Wandstärke des Gehäuses wirkt die verlängerte schlitzförmige Gehäuseöffnung nicht wie ein Langloch, sondern HFtechnisch eher stark oval, sodass diese beidseitig ohne große Einwirkung um 1 bis 2 mm verlängert werden kann.

Wie aus Fig. 4 ersichtlich, kann die Primärantenne 4 in dem rechteckigen Bereich 65 angeordnet sein. Die Primärantenne 4 kann vorzugsweise in Form einer Leiterbahn 41, 42, 43, 44 ausgebildet sein, die einen aktiven Teilbereich 42 und einen inaktiven Teilbereich 41 aufweisen kann. Der aktive und inaktive Teilbereich 41, 42 kann über einen 180° Bogenabschnitt 43 miteinander verbunden sein, sodass die Leiterbahn eine spezifische Gesamtlänge aufweist, um einen Resonator bei einer Betriebsmittenfrequenz darzustellen. Am Ende dieser Länge kann sich ein abgerundeter Bereich 44 befinden, um die Güte des Resonators zu verringern, und zwar gerade in dem Maße, um ein Nachklingeln unterhalb einer Pfadlänge des Viterbi-Algorithmus der verwendeten Sende- und/oder Empfangseinheit zu halten.

Der aktive Teilbereich 42 dient in diesem Fall als eigentlicher "Abstrahler", wobei die Energie von dem inaktiven Teilbereich 41 über eine aus dem HF-Schirmzaun 16 herausragende Massefläche 181 des HF-Schirmblechs 18 auf der Leiterkartenunterseite 64 zurückgeleitet werden kann, um nicht als "Abstrahler" zu wirken. Das Zusammenspiel aus dem aktiven und inaktiven Teilbereich 41 und 42 ermöglicht die Ausbildung eines Strahlers, welcher eigentlich über eine gesamte Breite der schlitzförmigen Gehäuseöffnung 5 gehen würde, auf eine Breite zu reduzieren, die etwas schmäler als die der schlitzförmigen Gehäuseöffnung 5 ist. Auf diese Weise können Beugungseffekte an den äußeren Kanten der schlitzförmigen Gehäuseöffnung den Strahler nur teilweise und definiert beeinflussen und dennoch ist eine Abstrahlung durch die schlitzförmige Gehäuseöffnung möglich. Die Massefläche 181 kann im Seitenprofil insbesondere eine L-förmige Struktur aufweisen. Um den Wirkungsgrad der Ableitung zu erhöhen, kann auf der Unterseite der Leiterplatte 64 ferner eine Struktur angebracht sein. Die Struktur kann beispielsweise auch ein HF-Schirmblech oder ein anderes Metallteil umfassen. Hierdurch kann die Restleistung umgelenkt und zu der schlitzförmigen Gehäuseöffnung 5 abgestrahlt werden. Dies führt zusätzlich zu einer besseren Anpassung der Antenne (-20... 30 dB im Bereich +-5% um die Mittenfrequenz) und ferner zu einer zusätzlichen Stabilität gegenüber Fertigungstoleranzen. Die Abstrahlung des notwendigen 180°Bogenabschnitts 43 kann mit einer Struktur 20, die ebenfalls in dem rechteckigen Bereich der Leiterplatte 65 angeordnet sein kann, auf einen Impedanzwert nahe über Null Ohm angepasst sein, um anschließend im HF-Schirmzaun 16 kurzgeschlossen zu werden. Die Struktur kann in einer Draufsicht auf die Leiterplatte beispielsweise ein Sägezahnprofil aufweisen.

Die Leiterplatte 6 kann derart im Gehäuse 2 ausgerichtet sein, dass die äußeren sich bis an der Leiterplattenkante 61 sich fortsetzenden Vias an der Schlitzbreite in Längsrichtung jeweils ca. 1 mm Abstand zu den Kanten der schlitzförmigen Gehäuseöffnung aufweisen können.

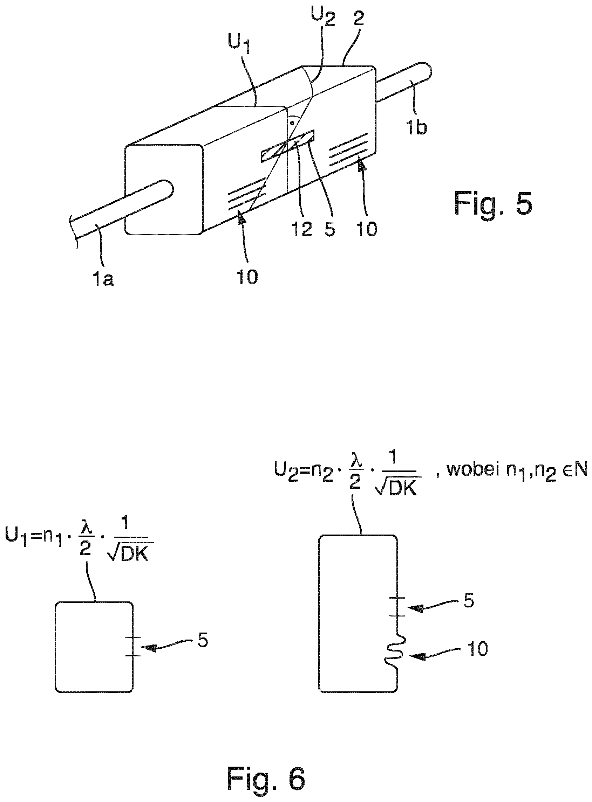

Fig. 5 zeigt eine schematische Darstellung einer weiteren Ausgestaltung der Vorrichtung, bei der das Gehäuse 2 ein 4-fach rotationssymmetrische Außenkontur aufweisen kann. Um die Vorrichtung in Bereichen einsetzen zu können, in denen potentiell Explosionsgefahr besteht (sogenannte explosionsgefährdete Bereiche, kurz Ex-Bereiche), ist die schlitzförmige Öffnung 5 mit einem anderen Material als Luft, insbesondere einem elektrisch nichtleitenden Material, z.B. Glas, gefüllt. Als besonders geeignete elektrisch nichtleitenden Materialen haben sich Kunststoffe, insbesondere Polyethylen erwiesen.

Ergänzend oder alternativ kann, wie in Fig. 5 dargestellt, das Gehäuse geometrisch derartig ausgebildet sein, dass zumindest zwei, in zwei großflächige Raumrichtungen gemessene äußere HF-Umlaufwege U1, U2, vorzugsweise die äußeren HF-Umlaufwege in jeder Raumrichtung des Gehäuses, einem ganzzahligen Vielfachen einer halben Wellenlänge λ/2 der elektromagnetischen Welle mit der die Signale übertragen werden, entspricht. Die HF-Umlaufwege können hierbei derartig gemessen bzw. festgelegt werden, dass diese jeweils durch die schlitzförmige Gehäuseöffnung gehen. Vorzugsweise können die HF-Umlaufwege so festgelegt werden, dass diese durch einen Mittelpunkt der jeweiligen schlitzförmigen Gehäuseöffnung laufen.

Zur Verdeutlichung der in Fig. 5 perspektivisch dargestellten HF- Umlaufwege U1 und U2 sind diese in Fig. 6 nochmals in einer Ebene dargestellt. Aus Fig. 6 ersichtlich, dass jeder HF-Umlaufweg U1 und U2 durch die schlitzförmige Gehäuseöffnung 5 geht.

Um eine Umlaufzeit einer Welle lokal zu verzögern, kann an einer äußerlichen Oberfläche des Gehäuses 2 ein oder mehrere Umlaufverzögerungselemente 10 ausgebildet sein, die derartig ausgebildet sind, dass ein entsprechender Umlauf vergrößert wird. In Fig. 5 sind exemplarisch zwei Verzögerungselemente 10 auf der Gehäuseoberfläche angebracht. Die in Fig. 5 dargestellten Verzögerungselemente 10 könne als rillenförmige Elemente ausgebildet sein. Denkbar sind aber auch punktförmige Elemente oder Elemente, die aus einem anderen Material als das Gehäuse 2, insbesondere einem dielektrischen Material oder einem hochfrequenten Metamaterial, ausgebildet sein können. Durch entsprechende Positionierung kann gezielt der HF-Umlaufweg in einer oder mehreren Raumrichtungen verändert, insbesondere vergrößert werden. Zu beachten gilt es, dass je nach Strukturgröße der Umlaufverzögerungselemente ein HF- Umlaufweg i.d.R. minimal kleiner als der (mechanische) Umfang, wie bspw. U_{Gehäuse} ist, da die elektromagnetische Welle insbesondere kleine Strukturen teilweise überfliegt und sich durch das Zusammenwirken von E- und H-Feld eine insgesamt leichte "Abkürzung" ergibt.

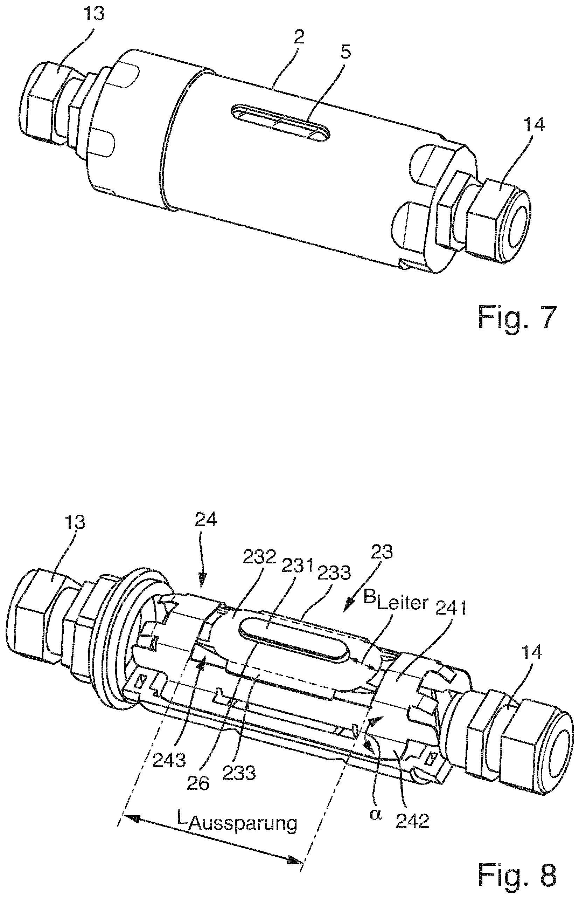

Figur 7 zeigt eine schematische Darstellung der erfindungsgemäßen Vorrichtung. Die Vorrichtung umfasst ein metallisches Gehäuse mit einer definierten Wanddicke D_{Gehäuse}, wobei das Gehäuse bezogen auf eine Außenkontur und mit Ausnahme der schlitzförmigen Gehäuseöffnung 5 vorzugsweise im Wesentlichen rotationssymmetrisch um eine Mittelachse ist, eine schlitzförmige Gehäuseöffnung 5 und jeweils eine Kabeldurchführung 13, 14 an jeder Stirnseite 21, 22. Das Gehäuse 2 ist ferner derartig ausgeführt, dass es in einem explosionsgefährdeten Bereich, insbesondere einem gasexplosionsgefährdeten Bereich einsetzbar ist. Hierzu ist das Gehäuse derartig ausgeführt, dass es der Zündschutzart "Druckfeste Kapselung", (Kennzeichnung Ex-d) gemäß der internationalen Norm IEC 600798-1 (Ausgabe 27.Juni 2014) genügt. Bei der Zündschutzart "Druckfeste Kapselung" wird die Ausbreitung einer Explosion verhindert. Hierbei beruht die Schutzart im Wesentlichen auf konstruktiven Maßnahmen, so dass ein Eindringen von Gasen zwar nicht verhindert wird, aber in dem Fall, dass zu einer Zündung im Inneren des Gehäuses kommt, das Gehäuse dem Explosionsdruck standhält und die Zündung nicht nach außen übertragen wird. Um den Anforderungen der Zündschutzart "Druckfeste Kapselung" zu genügen weist das metallische Gehäuse 2 im einfachsten Fall eine entsprechende Mindestdicke von bspw. 3 mm auf. Für die Ausgestaltung der schlitzförmigen Gehäuseöffnung 5 stellt die Anforderung an die Zündschutzart "Druckfeste Kapselung" jedoch eine erhöhte konstruktive Herausforderung dar.

Zur Verdeutlichung des inneren Aufbaus der Vorrichtung ist die in Fig. 7 dargestellte Vorrichtung in Fig. 8 nochmals ohne das äußere Gehäuse dargestellt. Prinzipiell ist die Vorrichtung aus einzelnen Komponenten ausgebildet, die sich, bspw. durch zusammenstecken, zu der erfindungsgemäßen Vorrichtung zusammenbauen lassen.

Wie aus Fig. 8 ersichtlich wird, liegt im Bereich der schlitzförmigen Gehäuseöffnung 5 ein aus einem Material mit einer relativen Dielektrizitätszahl (einheits- bzw. dimensionslose Einheit) echt größer eins (εᵣ > 1) gefertigtes Formteil, welches insbesondere für elektromagnetische Strahlung im sichtbaren Bereich transparent ist und somit im Folgenden auch als Leiter 23 bezeichnet wird. Beispielsweise kann der Leiter 23 aus einem Kunststoff, insbesondere Polyethylen (PE) gefertigt sein. Alternativ kann der Leiter 23 auch aus einem Glas gefertigt sein. Durch die Wahl der relativen Dielektrizitätszahl εᵣ echt größer eins wird eine Verkürzung der Wellenlänge λ bewirkt. Der Leiter 23 ist derartig ausgeführt, dass dieser einen hervorstehenden schlitzförmigen Bereich 231 aufweist, der bei aufgesetztem Gehäuse 2 in die schlitzförmige Gehäuseöffnung 5 bis zu einer spezifizierten Tiefe T_{Leiter} eingreift. Ferner weist der Leiter 23 einen, den schlitzförmigen Bereich 231 allseitig umgebenden bzw. umlaufenden Bereich 232 mit einer definierten Mindestbreite B_{Leiter} auf. Die Mindestbreite ist dabei derartig gewählt, dass ein gemäß der Norm IEC 60079-1 (Ausgabe 27.Juni 2014) kürzester Weg durch die schlitzförmige Gehäuseöffnung des metallischen Gehäuses von einer Innenseite zu einer Außenseite mindestens 3 mm beträgt, wenn für ein Volumen V ≤ 10cm³ gilt, oder mindestens 6 mm beträgt, wenn für das Volumen 10 cm³< V ≤ 100 cm³ oder mindestens 10 mm beträgt, wenn für das Volumen V > 100 cm³ gilt, wobei der von dem gesamten Gehäuse eingeschlossene Freiraum als Volumen V definiert wird. In einer besonders bevorzugten Ausgestaltung beträgt die definierte Mindestbreite 6 mm.

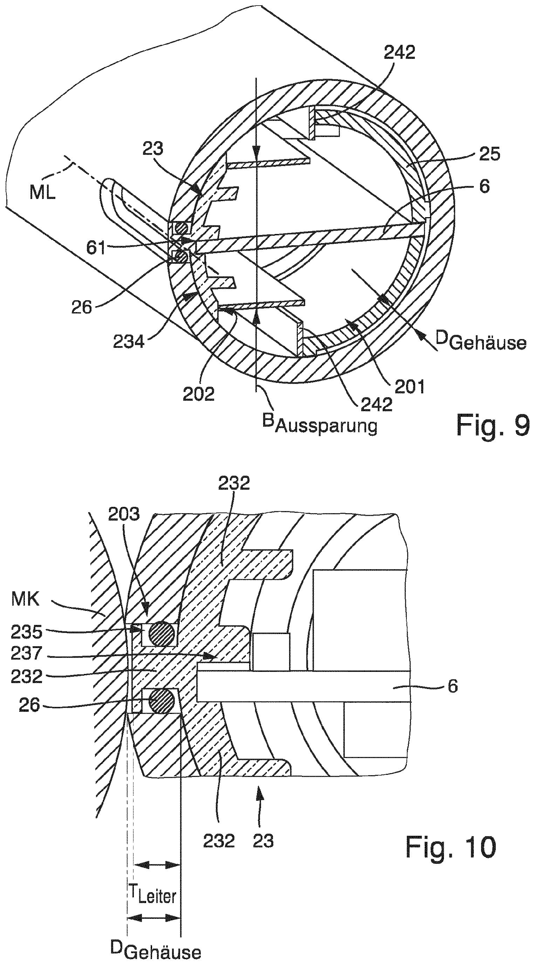

Fig. 9 zeigt einen Querschnitt durch die erfindungsgemäße Vorrichtung. Wie aus Fig. 9 ersichtlich, ist eine Außenfläche des umlaufenden Bereichs 232 so an die Gehäusewand angepasst, dass der umlaufenden Bereich 232 im eingebauten Zustand möglichst bündig an der Innenseite des Gehäuses 2 aufliegt. Durch die entsprechende Ausgestaltung des Leiters 23 ergibt sich, dass dieser in einer Draufsicht eine im Wesentlichen ovale Kontur aufweist, wobei zur mechanischen Anbindung des Leiters 23 an das Gehäuse 2 ferner zwei Flanken 233 als Kontaktbereiche vorgesehen sind. Die beiden Flanken 233 schließen jeweils an einer langgezogenen Seite des Leiters an den umlaufenden Bereich 232 an. Über die Flanken 233 kann der Leiter 23 im eingebauten Zustand durch einen Federstahlbügel 24 an die Innenseite des Gehäuses gepresst werden. Damit eine möglichst homogene Kraftverteilung und somit ein flächiges Anpressen des Leiters 23 an der Innenseite des Gehäuses 2 erfolgt, ist eine Oberflächenabschnitt des umlaufenden Bereichs 232 an einen Oberflächenabschnitt um die schlitzförmige Gehäuseöffnung 5 der Innenseite des Gehäuses 2 angepasst. Dies bedeutet, dass der Leiter 23 im Querschnitt eine im Wesentlichen gebogenen Kontur aufweist.

Um ein Eindringen von Staub und/oder Wasser zu verhindern, weist der hervorstehende umlaufende Bereich 232 des Leiters 23, wie in Fig. 9 dargestellt, an den in dem eingebauten Zustand zur Gehäusewand gerichteten Seitenfläche eine Aufnahme 235 für eine Dichtung 26 auf. Als Dichtung kann beispielsweise ein allseitig umlaufender ovaler Ring vorgesehen sein, der im eingebauten Zustand in die Aufnahme 235 eingebracht ist.

Fig. 10 zeigt eine Detailansicht der schlitzförmigen Gehäuseöffnung 5, um die erfindungsgemäße Ausgestaltung des Leiters 23 zu verdeutlichen. Erfindungsgemäß ist der umlaufende Bereich 232 des Leiters 23 so ausgeführt, dass er im eingebauten Zustand bis zu der maximal spezifizierten Tiefe T_{Leiter} in die schlitzförmige Gehäuseöffnung 5 eingreift, wobei die maximale spezifizierte Tiefe T_{Leiter} derartig gewählt ist, dass eine Kugel bzw. Halbkugel MK, beim Herabfallen auf die schlitzförmige Gehäuseöffnung gerade nicht den in der schlitzförmigen Gehäuseöffnung 5 eingeführte schlitzförmigen Bereich berührt. In Fig. 10 ist die Kugel schematisch angedeutet und mit dem Bezugszeichen MK versehen. Als Kugel bzw. Halbkugel kommt insbesondere eine gehärtete Stahlkugel mit einem Durchmesser von 25 mm in Betracht. Die Schlagfestigkeitsprüfung wird insbesondere gemäß den Angaben in der internationalen Norm IEC 60079-0 (Ausgabe 13.12.2017) durchgeführt.

Um eine mechanische sichere Anbindung des Leiters 23 an das Gehäuse 2 bzw. dessen Innenseite zu gewährleisten ist der Federstahlbügel 24 vorgesehen, der dazu dient, den Leiter 23 an die Innenseite des Gehäuses 2 zu pressen. Hierzu weist der Federstahlbügel 24 im Querschnitt in einem Mittenbereich eine im Wesentliche U-förmige Ausgestaltung auf, bei der an den beiden Enden jeweils ein Steg 242 in einem Winkel von ca. 90° abgehen, sodass der Federstahlbügel an zumindest zwei Stellen an der Gehäusewand anliegt. Zur Aufnahme des Leiters weist der Federstahlbügel in dem Mittenbereich eine Aussparung auf, die so ausgestaltet ist, dass der Leiter in die Aussparung eingebracht werden kann und dass der Leiter 23 mit den beiden Flanken 233 auf den Kanten der Aussparung 243 bündig aufliegt.

Um die Wellenausbreitung möglichst wenig zu beeinflussen, ist die Aussparung 243 des Federstahlbügels 24 so ausgebildet, dass eine Länge der Aussparung L_{Aussparung} echt größer ist als die Breite der schlitzförmigen Gehäuseöffnung B_{Schlitz} oder in dem Fall, dass jeweils ein Leuchtmittel, bspw. eine LED, auf der Leiterplatte rechts und links des HF-Schirmzauns 16 vorgesehen ist, die Breite der Aussparung echt größer ist als ein Abstand der beiden Leuchtmittel zueinander. Hinsichtlich einer Breite der Aussparung B_{Aussparung} ist der Federstahlbügel 24 so ausgebildet, dass die Breite an einen Innendurchmesser des Gehäuses 2 angepasst ist, wobei die Breite vorzugsweise so groß wie möglich gewählt wird.

Der Federstahlbügel 24 wird in dem Gehäuse 2 auf einem Kunststoffformteil 25 gehalten, welches gleichzeitig als Träger für die Leiterplatte 6 dient. Das Kunststoffformteil 25 ist ebenfalls so ausgebildet, dass es mit einer Oberflächenkontur an eine Oberflächenkontur der Innenseite des Gehäuses angepasst ist. Das Kunststoffformteil 25 ist so ausgebildet, dass im eingebauten Zustand in Längsrichtung die Leiterplatte 6 mit der an die Primärantenne 4 angrenzende Leiterplattenkante 61 parallel zu einer Mittellinie ML der schlitzförmigen Gehäuseöffnung 5 positioniert wird. Ferner kann, wie in Fig. 3 dargestellt, die Leiterplatte in einer Querrichtung der schlitzförmigen Gehäuseöffnung mit der Leiterplattenkante 61 im Wesentlichen mittig angeordnet sein. Zur exakten Positionierung der Leiterplattenkante 61 kann der Leiter 23 einen oder mehrere Stege 237 aufweisen, die die Leiterplatte 6 halten und/oder positionieren. Der Steg 237 kann beispielsweise in Form einer länglichen im Querschnitt U-förmigen Ausnehmung ausgestaltet sein, in die die Leiterplatte 6 eingesteckt werden kann.

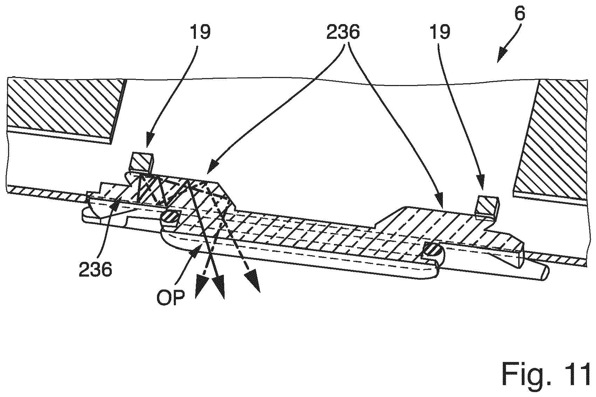

Fig. 11 zeigt einen Querschnitt durch einen Teil des Formteils bzw. des Leiters 23, um eine weitere Ausgestaltung der erfindungsgemäßen Vorrichtung zu verdeutlichen. Hierbei ist der Leiter 23 so ausgebildet, dass er einen internen Lichtwellenleiter 236 aufweist, über den ein optischer Pfad OP von einem Eintrittszu einem Austrittspunkt bzw. -Bereich für das optische Signal ausgebildet wird. In Fig. 11 sind exemplarisch drei unterschiedliche optische Pfade dargestellt. Durch den innerhalb des Leiters ausgebildeten Lichtwellenleiter 236 können die LEDs derartig auf der Leiterplatte 6 angeordnet sein, dass diese nicht direkt hinter der schlitzförmigen Gehäuseöffnung 5 angeordnet sein müssen, sondern außerhalb eines von der schlitzförmigen Gehäuseöffnung abgeschatteten Bereichs auf der Leiterplatte 6 angeordnet sein können. Über den Lichtwellenleiter wird das optische Signal dann von einem Eintrittspunkt bzw. -bereich, welcher unmittelbar bei dem Leuchtmittel ist, zu dem Austrittspunkt bzw. -bereich geführt. Der Austrittspunkt bzw. -bereich kann hierbei insbesondere in dem Bereich liegen, um den die Länge der schlitzförmigen Gehäuseöffnung aufgrund der LEDs vergrößert worden ist. Beispielsweise kann, wie dies exemplarisch in Fig. 11 dargestellt ist, in dem Fall, dass zwei Leuchtmittel auf der Leiterplatte vorgesehen sind, die schlitzförmige Gehäuseöffnung rechts und links mit einer Länge von ca. einem Millimeter (1 mm) verlängert sein, und das optische Signal von den Leuchtmitteln 19 über die Lichtwellenleiter 236 zu diesen Bereichen geführt sein.

## Patentansprüche

1. Vorrichtung zur Übertragung von Signalen mit Hilfe elektromagnetischer Wellen (3) einer bestimmten Wellenlänge (λ) aus einem zumindest teilweise metallischen für den Einsatz in einem explosionsgefährdeten Bereich ausgebildeten Gehäuse (2), umfassend:
- das Gehäuse (2) mit einer definierten Wanddicke (D_{Gehäuse}), wobei das Gehäuse im Wesentlichen eine rotationssymmetrische, vorzugsweise zylindrische Außenkontur aufweist,
- eine in dem Gehäuse (2) angeordnete Sende-/Empfangseinheit (11) zum Erzeugen und/oder Empfangen der elektromagnetischen Wellen (3),
- mindestens eine in dem Gehäuse (2) angeordnete Primärantenne (4) zum Aus- und/oder Einkoppeln der elektromagnetischen Wellen (3) und Übertragen der elektromagnetischen Wellen (3) an die Sende-/Empfangseinheit (11),
- zumindest eine schlitzförmige Gehäuseöffnung (5) die derartig ausgebildet ist, dass im Zusammenspiel mit der Primärantenne (4) die Signale mit Hilfe der elektromagnetischen Wellen (3) in bzw. aus dem Gehäuse übertragen werden,
**dadurch gekennzeichnet, dass**
- ein aus einem Material mit einer relativen Dielektrizitätszahl echt größer eins gefertigtes Formteil (23, 231, 232, 233, 234, 235, 236), welches einen an die schlitzförmige Gehäuseöffnung angepassten hervorstehenden schlitzförmigen Bereich (231) aufweist, mit dem das Formteil bis zu einer spezifizierten Tiefe (T_{Leiter}) maximal in die Gehäuseöffnung eingreift, wobei die spezifizierte Tiefe (T_{Leiter}) derartig gewählt ist, dass eine Kugel oder Halbkugel (MK) mit einem Durchmesser beim Aufsetzen auf der zumindest einen schlitzförmigen Gehäuseöffnung das Formteil nicht berührt, wobei das Formteil ferner einen an den schlitzförmigen Bereich angrenzenden den schlitzförmigen Bereich umlaufenden Bereich (232) mit einer Mindestbreite (B_{Leiter}) aufweist, wobei das Formteil mit dem umlaufenden Bereich im Bereich um die zumindest eine schlitzförmige Gehäuseöffnung herum an eine Innenseite (202) des Gehäuses gepresst wird und die Mindestbreite des umlaufenden Bereichs (232) derartig ausgebildet ist, dass sich für ein Gas gemäß der Norm IEC 60079-1 Ausgabe 27. Juni 2014, ein kürzester Weg durch die zumindest eine schlitzförmige Gehäuseöffnung von der Innenseite zu einer Außenseite des metallischen Gehäuses von mindestens 3 mm ergibt, wenn für ein Volumen V ≤ 10cm³ gilt, oder mindestens 6 mm ergibt, wenn für das Volumen 10 cm³< V ≤ 100 cm³ gilt oder mindestens 10 mm ergibt, wenn für das Volumen V > 100 cm3 gilt, wobei der von dem gesamten Gehäuse eingeschlossene Freiraum als Volumen V definiert ist.

2. Vorrichtung nach Anspruch 1, ferner umfassend eine Dichtung (26), die zwischen den in die zumindest eine schlitzförmige Gehäuseöffnung eingebrachten schlitzförmigen Bereich (231) des Formteils und einen die schlitzförmige Gehäuseöffnung definierenden Gehäusewandabschnitt (203) eingebracht ist, sodass ein Eindringen von Staub und/oder Wasser vermieden wird.

3. Vorrichtung nach dem vorhergehenden Anspruch, wobei die Dichtung (26) in eine seitliche Aufnahme (235) des Gehäusewandabschnitts (203) und/oder eine seitliche Aufnahme (235) des schlitzförmigen Bereichs (231) eingebracht ist.

4. Vorrichtung nach einem der vorhergehenden Ansprüche, ferner umfassend einen Federstahlbügel (24), der im Inneren des Gehäuses angeordnet ist und der dazu ausgebildet ist, das Formteil mit dem umlaufenden Bereich in einem Bereich um die zumindest eine schlitzförmige Gehäuseöffnung herum an die Innenseite des Gehäuses zu drücken bzw. zu pressen.

5. Vorrichtung nach dem vorhergehenden Anspruch, wobei der Federstahlbügel (24) im Querschnitt im Wesentlichen einen U-förmigen Mittenbereich (241) aufweist, an den an den beiden Enden jeweils ein nach außen hin, vorzugsweise in einem Winkel (α) von größer 45° abgehender Steg (242) ausgebildet ist, die so dimensioniert sind, dass der Federstahlbügel an zumindest zwei Stellen bzw. Bereichen an einer Gehäusewand (204) anliegt bzw. abgestützt wird, wobei der Federstahlbügel ferner eine Aussparung (243) und das Formteil ferner zwei Flanken (233) aufweist, von denen je eine an einer langgezogenen Seite des umlaufenden Bereichs ausgebildet ist, und die Aussparung und die Flanken so ausgestaltet sind, dass das Formteil in die Aussparung eingebracht werden kann und das Formteil mit den Flanken auf dem Federstahlbügel aufliegt, sodass der Federstahlbügel das Formteil mit dem umlaufenden Bereich (232) an die Innenseite des Gehäuses drückt bzw. presst.

6. Vorrichtung nach einem der vorhergehenden Ansprüche, ferner umfassend eine innerhalb des Gehäuses (2) angeordnete Leiterplatte (6) die derartig als Primärantenne (4) zum Aus- und/oder Einkoppeln der elektromagnetischen Wellen (3) ausgebildet ist, dass die elektromagnetischen Wellen (3) seitlich an einer Leiterplattenkante (61) aus- bzw. eingekoppelt werden und wobei die Leiterplatte so in dem Gehäuse (2) angeordnet ist, dass die Leiterplattenkante (61) zu der schlitzförmigen Gehäuseöffnung (5) positioniert ist.

7. Vorrichtung nach dem vorhergehenden Anspruch, wobei die Leiterplatte (6) durch eine in das Gehäuse eingebrachte Leiterplattenhalterung (25) so gehalten und angeordnet wird, dass die Leiterplattenkante (61) zu der schlitzförmigen Gehäuseöffnung (5) positioniert ist.

8. Vorrichtung nach zumindest dem vorhergehenden Anspruch, wobei das Formteil (23) Mittel zur Halterung und/oder Positionierung der Leiterplatte (6), insbesondere ein oder mehrere Stege (237) aufweist.

9. Vorrichtung nach zumindest einem der vorhergehenden Ansprüche, wobei die Leiterplatte (6) zumindest ein Leuchtmittel (19), insbesondere eine LED, aufweist, das an der Leiterplattenkante (61) angeordnet ist, und wobei vorzugsweise für die Länge der schlitzförmigen Gehäuseöffnung L_{Schlitz} = λ/2 + n_{LED} · LLED gilt, wobei n_{LED} die Anzahl der Leuchtmittel darstellt und L_{LED} ein Wert kleiner gleich 2 mm ist.

10. Vorrichtung nach zumindest einem der vorhergehenden Ansprüche, wobei die zumindest eine schlitzförmige Gehäuseöffnung derartig ausgebildet ist, dass für eine Länge der schlitzförmigen Gehäuseöffnung L_{Schlitz} = λ/2 ± λ/25 und für eine Breite der schlitzförmigen Gehäuseöffnung B_{Schlitz} < 25mm, bevorzugt B_{Schlitz} ≤ 10mm, besonders bevorzugt B_{Schlitz} ≤ 6mm, ganz besonders bevorzugt B_{Schlitz} = 4mm gilt.

11. Vorrichtung nach einem der vorhergehenden Ansprüche, wobei das Gehäuse derartig ausgebildet ist, dass für eine Länge des Gehäuses L_{Gehäuse} < λ, vorzugsweise L_{Gehäuse} < 0,95·λ, besonders bevorzugt L_{Gehäuse} < 0,90·λ gilt.

12. Vorrichtung nach zumindest einem der vorhergehenden Ansprüche, wobei für die Breite der schlitzförmigen Gehäuseöffnung ferner B_{Schlitz} ≥ 1/100·λ gilt.

13. Vorrichtung nach zumindest einem der vorhergehenden Ansprüche, wobei für einen Umfang der rotationssymmetrische, vorzugsweise zylindrischen Außenkontur des Gehäuse U_{Gehäuse} = n·λ/4 mit n ∈ N gilt.

14. Feldgeräteadapter zur drahtlosen Datenübertragung in bzw. aus einem explosionsgefährdeten Bereich umfassend eine Vorrichtung nach einem der vorhergehenden Ansprüche.

15. Feldgerät der Automatisierungstechnik umfassend einen Feldgeräteadapter nach dem vorhergehenden Anspruch, wobei das Gehäuse (2) an einer zweiten Stirnseite (22) ein mechanisches Anschlusselement zum Anschließen, insbesondere Anschrauben des Feldgeräteadapters an eine Kabeldurchführung des Feldgerätes aufweist.

## Claims

1. Apparatus designed for the transmission of signals using electromagnetic waves (3) of a certain wavelength (λ) from a housing (2) which is at least partially metallic and designed for use in a hazardous area, comprising:
- the housing (2) with a defined wall thickness (D_{Gehäuse}), wherein the housing essentially has a rotationally symmetrical, preferably cylindrical, outer contour,
- a transmission/reception unit (11) arranged in the housing (2), wherein said unit is designed to generate and/or receive electromagnetic waves (3),
- at least a primary antenna (4) arranged in the housing (2), wherein said antenna is designed to couple and/or decouple electromagnetic waves (3), and to transmit the electromagnetic waves (3) to the transmission/reception unit (11),
- at least one slot-like housing opening (5), which is designed in such a way that - with the interaction of the primary antenna (4) - the signals are transmitted into and out of the housing with the help of the electromagnetic waves (3),
**characterized in that**
- a molded piece (23, 231, 232, 233, 234, 235, 236) made from a material that has a relative dielectric constant truly greater than one, wherein said molded piece has a slot-shaped section (231) - which projects out and is adapted to the slot-shaped housing opening - with which the molded piece engages at a maximum in the housing opening down to a specific depth (T_{Leiter}), wherein the specific depth (T_{Leiter}) is selected in such a way that a sphere or semi-sphere (MK) with a given diameter does not touch the molded piece when placed on the at least one slot-shaped housing opening, wherein the molded piece further has a section (232) that surrounds the slot-shaped section and is adjacent to the slot-shaped section, with a minimum width (B_{Leiter}), wherein the molded piece with the circumferential area is pressed against an inner side (202) of the housing in the area around the at least one slot-shaped housing opening and the minimum width of the circumferential area (232) is designed in such a way that it produces a shortest path - for a gas according to standard IEC 60079, edition of 27 June 2014 - through the at least one slot-shaped housing opening from the interior to the exterior of the metallic housing, said path being at least 3 mm if V ≤ 10 cm³ applies for the volume, or of at least 6 mm if 10 cm³ < V ≤ 100 cm³ applies for the volume, or at least 10 mm if V > 100 cm³ applies for the volume, wherein the free space enclosed by the entire housing is defined as the volume V.

2. Apparatus as claimed in Claim 1, further comprising a seal (26) inserted between the slot-shaped section (231) of the molded piece introduced into the at least one slot-shaped housing opening and a housing wall section (203) defining said slot-shaped housing opening, such that the penetration of dust and/or water is avoided.

3. Apparatus as claimed in the previous claim, wherein the seal (26) is inserted in a lateral holder (235) of the housing wall section (203) and/or a lateral holder (235) of the slot-shaped section (231).

4. Apparatus as claimed in one of the previous claims, further comprising a spring steel bracket (24) which is arranged inside the housing and which is designed to push or press the molded piece with the circumferential area against the inner side of the housing in an area around the at least one slot-shaped housing opening.

5. Apparatus as claimed in the previous claim, wherein the spring steel bracket (24) has a cross-section that has an essentially U-shaped central area (241) at which a bar (242) is formed at both ends, said bar exiting towards the outside, preferably at an angle (α) greater than 45°, wherein said ends are sized in such a way that the spring steel bracket rests or is supported on a housing wall (204) at at least two points or areas, wherein the spring steel bracket further has a recess (243) and the molded piece further has two edges (233), each of which is formed on an elongated side of the circumferential area, and the recess and the edges are designed in such a way that the molded piece can be introduced in the recess and the molded piece rests on the spring steel bracket with the edges, such that the spring steel bracket presses or pushes the molded piece with the circumferential area (232) against the inner side of the housing.

6. Apparatus as claimed in one of the previous claims, further comprising a printed circuit board (6) arranged inside the housing (2) which is designed as a primary antenna (4) to couple and decouple the electromagnetic waves (3) in such a way that the electromagnetic waves (3) are coupled and decoupled laterally at an printed circuit board edge (61), and wherein the printed circuit board is arranged in the housing (2) in such a way that the printed circuit board edge (61) is positioned in relation to the slot-shaped housing opening (5).

7. Apparatus as claimed in the previous claim, wherein the printed circuit board (6) is held and arranged by a printed circuit board holder (25) introduced in the housing in such a way that the printed circuit board edge (61) is positioned in relation to slot-shaped housing opening (5).

8. Apparatus as claimed in at least the previous claim, wherein the molded piece (23) has means to hold and/or position the printed circuit board (6), particularly one or more bars (237).

9. Apparatus as claimed in at least in one of the previous claims,
wherein the printed circuit board (6) has at least a means of lighting (19), particularly an LED, which is arranged on the printed circuit board edge (61), and wherein the following applies preferably for the length of the slot-shaped housing opening L_{Schlitz} = λ/2 + nLED · LLED, where nLED represents the number of the means of lighting and L_{LED} is a value less than or equal to 2 mm.

10. Apparatus as claimed in at least in one of the previous claims, wherein the at least one slot-shaped housing opening is implemented in such a way that L_{Schlitz} = λ/2 ± λ/25 applies for a length of the slot-shaped housing opening and B_{Schlitz} < 25 mm, preferably B_{Schlitz} ≤ 10 mm, particularly preferably B_{Schlitz} ≤ 6 mm, most particularly preferably B_{Schlitz} ≈ 4 mm applies for a width of the slot-shaped housing opening.

11. Apparatus as claimed in one of the previous claims, wherein the housing is designed in such a way that the following applies for a length of the housing, L_{Gehäuse} < λ, preferably L_{Gehäuse} < 0.95·λ, particularly preferably L_{Gehäuse} < 0.90·λ.

12. Apparatus as claimed in at least one of the previous claims, wherein the following further applies for the width of the slot-like housing opening, B_{Schlitz} ≥ 1/100·λ.

13. Apparatus as claimed in at least one of the previous claims, wherein the following applies for a circumference of the rotationally symmetrical, preferably cylindrical, outer contour of the housing U_{Gehäuse} = n·λ/4 with n ∈ N.

14. Field device adapter for the wireless transmission of data into or out of a hazardous area comprising an apparatus as claimed in one of the previous claims.

15. Field device used in automation engineering comprising a field device adapter as claimed in the previous claim, wherein, on a second front face (22) the housing (2) has a mechanical connection element to connect, particularly screw on, the field device adapter to a cable entry of the field device.

## Revendications

1. Dispositif destiné à la transmission de signaux à l'aide d'ondes électromagnétiques (3) d'une longueur d'onde déterminée (λ) à partir d'un boîtier (2) au moins partiellement métallique conçu pour une utilisation dans une zone explosible, comprenant :
- le boîtier (2) avec une épaisseur de paroi définie (D_{Gehäuse}), le boîtier présentant pour l'essentiel un contour extérieur à symétrie de révolution, de préférence cylindrique,
- une unité d'émission/réception (11) disposée dans le boîtier (2), laquelle unité est destinée à générer et/ou recevoir les ondes électromagnétiques (3),
- au moins une antenne primaire (4) disposée dans le boîtier (2), laquelle antenne est destinée à émettre et/ou recevoir les ondes électromagnétiques (3), et à transmettre les ondes électromagnétiques (3) à l'unité d'émission/réception (11),
- au moins une ouverture de boîtier en forme de fente (5), laquelle ouverture est conçue de telle sorte que, en interaction avec l'antenne primaire (4), les signaux sont transmis à l'aide des ondes électromagnétiques (3) dans ou hors du boîtier,
**caractérisé en ce**
- **qu'**une pièce moulée (23, 231, 232, 233, 234, 235, 236) fabriquée dans un matériau ayant une constante diélectrique relative réellement supérieure à un, laquelle pièce moulée présente une zone en forme de fente (231) en saillie, adaptée à l'ouverture de boîtier en forme de fente, avec laquelle la pièce moulée s'engage au maximum dans l'ouverture du boîtier jusqu'à une profondeur spécifiée (T_{Leiter}), la profondeur spécifiée (T_{Leiter}) étant choisie de telle sorte qu'une bille ou une demi-bille (MK) d'un diamètre donné ne touche pas la pièce moulée lorsqu'elle est placée sur l'au moins une ouverture de boîtier en forme de fente, la pièce moulée présentant en outre une zone (232) entourant la zone en forme de fente, adjacente à la zone en forme de fente, avec une largeur minimale (B_{Leiter}), la pièce moulée étant pressée avec la zone périphérique dans la zone autour de l'au moins une ouverture de boîtier en forme de fente contre une face intérieure (202) du boîtier et la largeur minimale de la zone périphérique (232) étant conçue de telle sorte qu'il en résulte pour un gaz selon la norme IEC 60079, édition du 27 juin 2014, le trajet le plus court à travers ladite au moins une ouverture de boîtier en forme de fente depuis l'intérieur jusqu'à l'extérieur du boîtier métallique d'au moins 3 mm si le volume V ≤ 10 cm³, ou d'au moins 6 mm si le volume est de 10 cm³ < V ≤ 100 cm³, ou d'au moins 10 mm si le volume V > 100 cm³, l'espace libre enfermé par l'ensemble du boîtier étant défini comme le volume V.

2. Dispositif selon la revendication 1, comprenant en outre un joint (26) inséré entre la zone en forme de fente (231) de la pièce moulée insérée dans ladite au moins une ouverture de boîtier en forme de fente et une partie de paroi de boîtier (203) définissant ladite ouverture de boîtier en forme de fente, de sorte que la pénétration de poussière et/ou d'eau est évitée.

3. Dispositif selon la revendication précédente, pour lequel le joint (26) est inséré dans un logement latéral (235) de la partie de paroi de boîtier (203) et/ou un logement latéral (235) de la zone en forme de fente (231).

4. Dispositif selon l'une des revendications précédentes, comprenant en outre un étrier en acier à ressort (24) qui est disposé à l'intérieur du boîtier et qui est conçu pour presser ou appuyer la pièce moulée avec la zone périphérique contre l'intérieur du boîtier dans une zone autour de ladite au moins une ouverture de boîtier en forme de fente.

5. Dispositif selon la revendication précédente, pour lequel l'étrier en acier à ressort (24) présente en section transversale pour l'essentiel une zone centrale en forme de U (241), zone sur laquelle sont formées aux deux extrémités respectivement une nervure (242) partant vers l'extérieur, de préférence selon un angle (α) supérieur à 45°, lesquelles extrémités sont dimensionnées de telle sorte que l'étrier en acier à ressort s'applique ou s'appuie en au moins deux endroits ou zones sur une paroi de boîtier (204), l'étrier en acier à ressort présentant en outre un évidement (243) et la pièce moulée présentant en outre deux flancs (233), chacun des flancs étant formé sur un côté allongé de la zone périphérique, et l'évidement et les flancs étant conçus de telle sorte que la pièce moulée peut être introduite dans l'évidement et que la pièce moulée repose avec les flancs sur l'étrier en acier à ressort, de sorte que l'étrier en acier à ressort presse ou appuie la pièce moulée avec la zone périphérique (232) contre la face intérieure du boîtier.

6. Dispositif selon l'une des revendications précédentes, comprenant en outre une carte de circuit imprimé (6) disposée à l'intérieur du boîtier (2) et conçue comme une antenne primaire (4) destinée à découpler ou coupler les ondes électromagnétiques (3) de telle sorte que les ondes électromagnétiques (3) sont découplées ou couplées latéralement au niveau d'un bord de carte de circuit imprimé (61), et la carte de circuit imprimé étant disposée dans le boîtier (2) de telle sorte que le bord de carte de circuit imprimé (61) est positionné par rapport à l'ouverture de boîtier en forme de fente (5).

7. Dispositif selon la revendication précédente, pour lequel la carte de circuit imprimé (6) est maintenue et disposée par un support de carte de circuit imprimé (25) inséré dans le boîtier, de sorte que le bord de la carte de circuit imprimé (61) est positionné par rapport à l'ouverture de boîtier en forme de fente (5).

8. Dispositif selon au moins la revendication précédente, pour lequel la pièce moulée (23) comporte des moyens de maintien et/ou de positionnement du circuit imprimé (6), notamment une ou plusieurs nervures (237).

9. Dispositif selon au moins l'une des revendications précédentes,
pour lequel la carte de circuit imprimé (6) présente au moins un moyen d'éclairage (19), notamment une LED, qui est disposé sur le bord de la carte de circuit imprimé (61), et
pour lequel on a de préférence pour la longueur de l'ouverture de boîtier en forme de fente L_{Schlitz} = λ/2 + n_{LED} · LLED, n_{LED} représentant le nombre de moyens d'éclairage et L_{LED} étant une valeur inférieure ou égale à 2 mm.

10. Dispositif selon au moins l'une des revendications précédentes, pour lequel l'au moins une ouverture de boîtier en forme de fente est réalisée de telle sorte que pour une longueur de l'ouverture de boîtier en forme de fente, L_{Schlitz} = λ/2 ± λ/25 et pour une largeur de l'ouverture de boîtier en forme de fente, B_{Schlitz} < 25 mm, de préférence B_{Schlitz} ≤ 10 mm, particulièrement de préférence B_{Schlitz} ≤ 6 mm, tout particulièrement de préférence B_{Schlitz} ≈ 4 mm.

11. Dispositif selon l'une des revendications précédentes, pour lequel le boîtier est conçu de telle sorte que, pour une longueur du boîtier, L_{Gehäuse} < λ, de préférence L_{Gehäuse} < 0,95·λ, particulièrement de préférence L_{Gehäuse} < 0,90·λ.

12. Dispositif selon au moins l'une des revendications précédentes, pour lequel, pour la largeur de l'ouverture du boîtier en forme de fente, B_{Schlitz} ≥ 1/100·λ.

13. Dispositif selon au moins l'une des revendications précédentes, pour lequel on a pour une circonférence du contour extérieur à symétrie de révolution, de préférence cylindrique, du boîtier U_{Gehäuse} = n·λ/4 avec n ∈ N.

14. Adaptateur d'appareil de terrain destiné à la transmission de données sans fil dans ou à partir d'une zone explosible comprenant un dispositif selon l'une des revendications précédentes.

15. Appareil de terrain de la technique d'automatisation comprenant un adaptateur d'appareil de terrain selon la revendication précédente, le boîtier (2) comportant sur une deuxième face frontale (22) un élément de raccordement mécanique pour le raccordement, notamment le vissage de l'adaptateur d'appareil de terrain à un passage de câble de l'appareil de terrain.
